# EUROPÄISCHE PATENTSCHRIFT

(11) **EP 2 823 369 B1**
(45) Veröffentlichungstag und Bekanntmachung des Hinweises auf die Patenterteilung: **09.12.2015**
(21) Anmeldenummer: 13700384.4
(22) Anmeldetag: 15.01.2013
(51) Int. Cl.: H01F 29/02, H02M 1/32, H02M 1/34, H02M 5/25

(54) **STUFENSCHALTER**
TAP SWITCH
COMMUTATEUR À PRISES DE RÉGLAGE

(30) Priorität: 08.03.2012 DE 102012101951
(43) Veröffentlichungstag der Anmeldung: 14.01.2015
(73) Patentinhaber: Maschinenfabrik Reinhausen GmbH, 93059 Regensburg (DE)
(72) Erfinder: REICH, Alexander, 93098 Mintraching (DE); KARRER, Volker, 93055 Regensburg (DE)
(86) Internationale Anmeldenummer: PCT/EP2013/050614
(87) Internationale Veröffentlichungsnummer: WO 2013/131664

(56) Entgegenhaltungen:
- WO-A1-01/35432
- WO-A1-2007/135209
- WO-A2-2011/033254
- DE-A1- 1 800 618
- DE-A1- 2 331 388
- DE-A1- 19 848 428
- GB-A- 1 216 691
- GB-A- 2 307 567
- US-A- 3 502 961
- US-A- 4 723 187
- US-A- 5 990 667
- FAIZ J ET AL: "Optimal configurations for taps of windings and power electronic switches in electronic tap-changers", IEE PROCEEDINGS: GENERATION, TRANSMISSION AND DISTRIBUTION, INSTITUTION OF ELECTRICAL ENGINEERS, GB, Bd. 149, Nr. 5, 16. September 2002 (2002-09-16), Seiten 517-524, XP006018982, ISSN: 1350-2360, DOI: 10.1049/IP-GTD:20020656
- BAUER P ET AL: "ELECTRONIC TAP CHANGER FOR 10KV DISTRIBUTION TRANSFORMER", EPE '97. 7TH. EUROPEAN CONFERENCE ON POWER ELECTRONICS AND APPLICATIONS. TRONDHEIM, SEPT. 8 - 10, 1997; [EPE . EUROPEAN CONFERENCE ON POWER ELECTRONICS AND APPLICATIONS], BRUSSELS, EPE ASSOCIATION, B, Bd. 3, 8. September 1997 (1997-09-08), Seiten 3.1010-3.1015, XP000768397, ISBN: 978-90-75815-02-3
- OSMAN DEMIRCI ET AL: "A NEW APPROACH TO SOLID-STATE ON LOAD TAP CHANGING TRANSFORMERS", IEEE TRANSACTIONS ON POWER DELIVERY, IEEE SERVICE CENTER, NEW YORK, NY, US, Bd. 13, Nr. 3, 1. Juli 1998 (1998-07-01), Seiten 952-961, XP011049528, ISSN: 0885-8977, DOI: 10.1109/61.686998

## Beschreibung

Die Erfindung betrifft einen Stufenschalter zur Spannungsregelung mit Halbleiter-Schaltelementen.

Bereits die DE 22 48 166 A beschreibt einen regelbaren Transformator mit Halbleiter-Schaltelementen. Dabei besteht die Sekundärwicklung aus einer bestimmten Anzahl von Regelwicklungsteilen, die in einer gewissen Anzahl von in Serie geschalteten Wicklungsgruppe zusammengefasst sind, wobei jede Wicklungsgruppe zwei oder drei parallel geschaltete Regelwicklungsteile enthält. Dabei ist jeder Regelwicklungsteil mit einem kontaktiosen Schaltelement versehen. In dieser Schrift ist auch eine andere Variante beschrieben, wobei die Sekundärwicklung des Transformators aus einer Gruppe von in Serie geschalteten Regelwicklungsteilen besteht, wobei jeder Regelwicklungsteil vier kontaktlose Schaltelemente enthält. Die Anordnung ist derart ausgestattet, dass die Richtung der Spannung an den Klemmen des Regelwicklungsteiles umkehrbar sowie auch wahlweise der gesamte Regelwicklungsteil überbrückbar ist.

Aus der DE 25 08 013 A ist eine weitere Vorrichtung zur stufenweisen Schaltung der Sekundärspannung eines Transformators bekannt. Auch hierbei ist die Sekundärwicklung in Teilwicklungen gruppiert, wobei ebenfalls Halbleiter-Schaltelemente zur Umschaltung vorgesehen werden können.

Die DE 197 47 712 C2 beschreibt eine Anordnung eines Stufenschalters ähnlicher Art an einen als Spartransformator ausgebildeten Stufentransformator. Hierbei sind ebenfalls einzelne Wicklungsteile vorgesehen, die einzeln und voneinander unabhängig beschaltbar sind. Neben festen Anzapfungen der Regelwicklung sind bei dieser Anordnung zusätzlich separate Wicklungsteile an- bzw. zuschaltbar.

Aus der WO 95/27931 sind verschiedene Ausführungsformen eines weiteren Stufenschalters zur unterbrechungslosen Lastumschaltung bekannt, wobei ebenfalls Thyristoren als Schaltelemente dienen. Mittels antiparallel geschalteter Thyristorpaare sind dabei unterschiedliche Wicklungsteile einer Stufenwicklung als Teil der Sekundärwicklung des jeweiligen Stufentransformators zu- oder abschaltbar. Zur Realisierung einer möglichst feinstufigen Spannungsregelung bei einer begrenzten Zahl vorhandener Wicklungsanzapfungen wird in dieser Schrift ferner ein als "discrete circle modulation" bezeichnetes Verfahren vorgeschlagen, bei dem die Thyristoren derart angesteuert werden, dass sich Zwischenwerte der Sekundärspannung ergeben.

FAIZ J ET AL: "Optimal configurations for taps of windings and power electronic switches in electronic tapchangers", , IEE PROCEEDINGS: GENERATION, TRANSMISSION AND DISTRIBUTION, INSTITUTION OF ELECTRICAL ENGINEERS, GB, vol. 149 no. 5 pages 517 - 524, ISSN: 1350-2360, 16-09-2002 offenbart eine Teilwicklung und eine Reihenschaltung aus zwei Halbleiter-Schaltelementen.

Aus der Publikation "A new approach to solid-state on load tap changing transformers" (Osman, Demirci; David, A., Torrey; Rober, C., Degeneff; IEEE Transactions on Power Delivery, Vol. 13, Issue: 3, Juli 1998) ist ein modular aufgebautes Halbleiter-Stufenschalter-System bekannt. Dabei ist die Regelwicklung mit mehreren Modulen in Reihe geschaltet. Jedes der Module weist Halbleiter-Schaltelemente sowie Teilwicklungen mit unterschiedlichen Windungszahlen auf. Durch gezielte Betätigung der Halbleiter-Schaltelemente können Teilwicklungen zur Regelwicklung zu- oder abgeschaltet werden. Durch die unterschiedlichen Windungszahlen ist es sogar möglich Teilwicklungen gegeneinander und gegen die Stammwicklung zu schalten. Diese Publikation bildet den Oberbegriff des ersten Patentanspruchs.

Bei den aus dem Stand der Technik bekannten Lösungen übernehmen Halbleiter-Schaltelemente de facto die Funktion des mechanischen Wählerarmes bei klassischen, mechanischen Stufenschaltern. Mittels der Halbleiter-Schaltelemente können einzelne Wicklungsanzapfungen der Regelwicklungen selbst zu- oder abgeschaltet werden. Es ist auch möglich, die Regelwicklung in Teilwicklungen zu unterteilen, die separat zugeschaltet werden können.

Diese Stufenschalter müssen Anforderungen der unterschiedlichen IEC Normen 60214-1 in Verbindung mit IEC 60060 erfüllen. Unter anderem müssen eine Wechselspannungsprüfung (separate source AC withstand voltage test) sowie eine Blitzstoßspannungsprüfung (lightning impulse voltage test) durchgeführt werden. Bei der Wechselspannungsprüfung wird eine einphasige Wechselspannung mit einer Frequenz von 50 oder 60 Hz, die 60 Sekunden dauert, angelegt. Hier können die Werte je nach zugelassener Betriebsmittelspannung bei 20 bis 325kV liegen. Die Blitzstoßspannungsprüfung muss in der genormten Form 1,2/50 µs durchgeführt werden. Dabei kann die Wechselspannung auf einen Wert von bis zu 1,8 MV ansteigen. Da diese Wechselspannungen unmittelbar am Stufenschalter, insbesondere an den Halbleiter-Schaltelementen, abfallen und diese nicht oder nur mit hohem Aufwand für diese hohen Werte ausgelegt werden können, sind Beschädigungen der Halbleiter-Schaltelemente wahrscheinlich. Aufgabe der Erfindung ist demnach, die Bereitstellung eines Stufenschalters mit Halbleiter-Schaltelementen, bei dem die Halbleiter-Schaltelemente vor hohen Wechselspannung, resultierend aus den Prüfungen gemäß den Normen, geschützt sind.

Diese Aufgabe wird durch einen Stufenschalter mit den Merkmalen des ersten Patentanspruches gelöst. Die Unteransprüche betreffen besonders vorteilhafte Weiterbildungen der Erfindung.

Die allgemeine erfinderische Idee besteht darin, parallel zu jedem Halbleiter-Schaltelement einen spannungsabhängigen Widerstand und einen Kondensator in Reihe zu schalten.

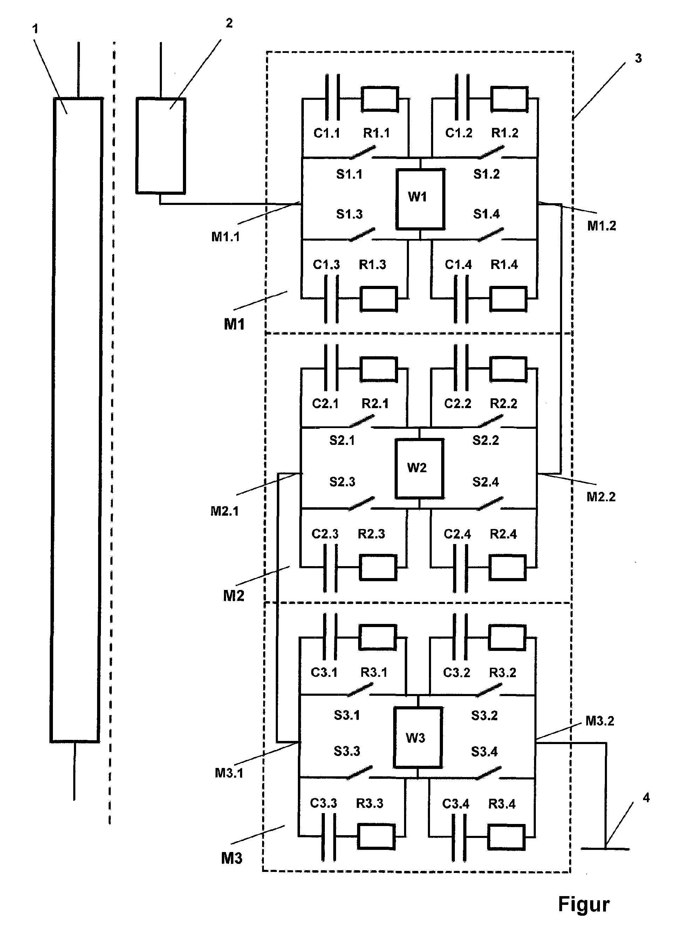

Die Erfindung soll nachstehend an Hand der Figur beispielhaft noch näher erläutert werden.

Die Figur zeigt einen zu regelnden Transformator, bestehend aus einer Unterspannungswicklung 1 und einer Oberspannungswicklung Regelwicklung (Oberspannungswicklung) 2, mit hier drei separaten Teilwicklungen W1, W2 und W3, an die ein erfindungsgemäßer Stufenschalter 3 angeschaltet ist. Die punktierte Linie symbolisiert dabei den Umfang des Stufenschalters 3, der hier aus drei einzelnen Modulen M1, M2, M3 besteht. Die Anzahl der Module ist jedoch frei wählbar. Das erste Modul M1 umfasst die erste Teilwicklung W1 sowie beidseitig davon zwei Überbrückungspfade, die jeweils eine Reihenschaltung aus zwei Halbleiter-Schaltelementen z.B. S1.1 und S1.2 bzw. S1.3 und S1.4 umfassen. Jeweils zwischen den beiden in Reihe geschalteten Schaltelementen ist eine Mittenanzapfung M1.1 bzw. M1.2 vorgesehen. Parallel zu jedem Halbleiter-Schaltelement S1.1 - S1.4 sind ein Kondensator C1.1 - C1.4 mit einem in Reihe geschalteten spannungsabhängiger Widerstand R1.1 - R1.4 angeordnet.

Die einzelnen Halbleiter-Schaltelemente sind nur schematisch als einfache Schalter dargestellt. Sie umfassen in der Praxis parallel geschaltete Thyristoren, IGBT's oder andere Halbleiter-Schaltelemente. Sie können auch jeweils eine Reihen- oder Parallelschaltung mehrerer solcher einzelner Halbleiter-Schalterelemente umfassen. Bei den spannungsabhängigen Widerständen handelt es sich um sog. Varistoren oder Suppressordioden.

Die Mittenanzapfung M1.1 des ersten Moduls M1 ist mit dem Ende der Oberspannungswicklung 2 elektrisch verbunden. Über die Mittenanzapfungen M1.2 und M2.2 sind Module M1 und M2 elektrisch verbunden. Dieses zweite Modul M2 ist identisch aufgebaut; es umfasst ebenfalls eine Teilwicklung W2, die beiden Reihenschaltungen aus jeweils zwei Halbleiter-Schaltelementen S2.1 und S2.2 bzw. S2.3 und S2.4 sowie dazu parallel in Reihe geschaltete Kondensatoren C2.1 - C2.4 und Widerstände R2.1 - R2.4. Ebenfalls sind zwischen den jeweiligen Reihenschaltungen wieder Mittenanzapfung M2.1 und M2.2 vorgesehen. Die Beschaltung der einen Mittenanzapfung M2.2 mit dem ersten Modul M1 wurde bereits erläutert; die zweite Mittenanzapfung M2.1 ihrerseits ist mit einer Mittenanzapfung M3.1 eines dritten gleichartigen Moduls M3 verbunden. Dieses Modul enthält ebenfalls Halbleiter-Schaltelemente S3.1 - S3.4 mit dazwischen liegenden Mittenanzapfungen M3.1 und M3.2. sowie Kondensatoren C3.1 - C3.4, Widerstände R3.1 - R3.4 und eine Teilwicklung W3. Das dritte Modul ist über die Mittenanzapfung M3.2 mit einer Lastableitung (Sternpunkt) 4 verbunden.

Die beschriebenen drei Module M1, M2, M3 können sich durch die Bemessungen der jeweiligen Teilwicklungen W1, W2, W3 unterscheiden.

Durch gezielte Betätigung der einzelnen Halbleiter-Schaltelemente Sn.1 - Sn.4 der einzelnen Module M1 - M3 ist es möglich einzelne Teilwicklungen W1 - W3 zu oder ab zuschalten. Bei unterschiedlich bemessenen Teilwicklungen ist es sogar möglich diese gegeneinander zu schalten.

Bei der Durchführung der Prüfungen nach der IEC Norm liegt an den Halbleiter-Schaltelementen Sn.n eine enorme Spannung an. Zum Schutz der Halbleiter-Schaltelemente Sn.n bei der Blitzstoßspannungsprüfung und der Wechselspannungsprüfung wird ein spannungsabhängiger Widerstand Rn.n (z.B. ein Varistor oder ein gasgefüllter Überspannungsableiter, etc.) parallel dazu geschaltet.

Der spannungsabhängige Widerstand Rn.n wird so ausgelegt, dass er im Falle der Wechselspannungsprüfung gerade nicht leitet oder in einer weiteren Ausführung einen derart geringen Strom führt, dass die entstehende Verlustleistung für den genannten Zeitraum nicht zur Zerstörung der Bauteile führt. Im Rahmen der Blitzstoßspannungsprüfung wird der spannungsabhängige Widerstand Rn.n leitend und begrenzt die am Halbleiter-Schaltelement Sn.n abfallende Spannung. Aus diesem Grund muss das Halbleiter-Schaltelement Sn.n so ausgelegt werde, dass es diese abfallende Spannung zerstörungsfrei übersteht.

Da der Anstieg des Spannungsimpulses der Blitzstoßspannungsprüfung im Vergleich zur Wechselspannungsprüfung um ein vielfaches schneller ist, weist dieser auch höherfrequente Anteile (größer 60Hz) als das Spektrum der Wechselspannungsprüfung (max. 60Hz) auf. Aus diesem Grund wird der spannungsabhängige Widerstand Rn.n. kapazitiv angebunden. Dies geschieht über die Serienschaltung mit dem Kondensator Cn.n. Durch diese Anbindung entsteht ein Hochpass. Während der niederfrequenten Wechselspannungsprüfung wird die Beanspruchung vom spannungsabhängigen Widerstand Rn.n ferngehalten.

Besonders vorteilhaft an dieser Anordnung ist die Tatsache, dass die spannungsabhängigen Widerstände Rn.n (Varistoren) in Verbindung mit den Kondensatoren Cn.n nun mehr ausschließlich an die Anforderungen der Blitzstoßspannungsprüfung angepasst werden müssen. Diese sind im Vergleich zu denen der Wechselspannungsprüfung deutlich niedriger, da die enthaltene Energie geringer ist, was sich auf die Kosten und den benötigten Bauraum niederschlägt. Ein weiterer positiver Effekt ist, dass auch die Halbleiter-Schalelemente Sn.n kleiner dimensioniert werden können. Auch das bringt Kostenvorteile mit sich.

## Patentansprüche

1. Stufenschalter zur Spannungsregelung mit Halbleiter-Schaltelementen an einem Regeltransformator mit einer Regelwicklung,
wobei der Stufenschalter (3) mindestens ein Modul (M1, M2, M3) aufweist,
wobei jedes Modul (M1, M2, M3) jeweils eine Teilwicklung (W1, W2, W3) der Regelwicklung sowie beidseitig davon zwei Überbrückungspfade umfasst,
wobei jeder Überbrückungspfad jeweils eine Reihenschaltung aus zwei Halbleiter-Schaltelementen (S1.1, S1.2; S1.3, S1.4; S2.1, S2.2; S2.3, S2.4; S3.1, S3.2; S3.3, S3.4; S4.1, S4.2; S4.3, S4.4) umfasst,
wobei jeweils zwischen den beiden in Reihe geschalteten Halbleiter-Schaltelementen (S1.1, S1.2; S1.3, S1.4; S2.1, S2.2; S2.3, S2.4; S3.1, S3.2; S3.3, S3.4; S4.1, S4.2; S4.3, S4.4) jedes Überbrückungspfades eine Mittenanzapfung (M1.1, M1.2; M2.1, M2.2; M3.1, M3.2) vorgesehen ist,
wobei jeweils eine der beiden Mittanzapfungen (M1.2; M2.1, M2.2; M3.1) jedes Moduls (M1, M2, M3) mit einer Mittanzapfung der benachbarten Module verbunden ist und wobei die eine verbleibende Mittenanzapfung (M3.2) des dritten Moduls (M3) mit der Lastableitung (4) und die andere verbleibende Mittenanzapfung (M1.1) des ersten Moduls (M1) mit der Regelwicklung (2) des Regeltransformators verbindbar sind,
**dadurch gekennzeichnet,**
**dass** parallel zu jedem Halbleiter-Schaltelement (S1.1, S1.2; S1.3, S1.4; S2.1, S2.2; S2.3, S2.4; S3.1, S3.2; S3.3, S3.4; S4.1, S4.2; S4.3, S4.4) ein in Reihe mit jeweils einem Kondensator (C1.1, C1.2; C1.3, S1.4; C2.1, C2.2; C2.3, C2.4; C3.1, C3.2; C3.3, C3.4; C4.1, C4.2; C4.3, C4.4) jeweils geschalteter spannungsabhängiger Widerstand (R1.1, R1.2; R1.3, R1.4; R2.1, R2.2; R2.3, R2.4; R3.1, R3.2; R3.3, R3.4; R4.1, R4.2; R4.3, R4.4) vorgesehen ist.

2. Stufenschalter nach Anspruch 1,
**dadurch gekennzeichnet,**
**dass** der Stufenschalter (3) aus genau drei Modulen M1, M2 und M3 besteht.

3. Stufenschalter nach Anspruch 2,
**dadurch gekennzeichnet,**
**dass** die Teilwicklungen (W1...W3) der drei Module (M1...M3) im Verhältnis 1:3:6 oder 1:3:9 aufgeteilt sind.

4. Stufenschalter nach einem der Ansprüche 1 bis 3,
**dadurch gekennzeichnet,**
**dass** die Halbleiter-Schaltelemente (S1.1, S1.2; S1.3, S1.4; S2.1, S2.2; S2.3, S2.4; S3.1, S3.2; S3.3, S3.4; S4.1, S4.2; S4.3, S4.4) jeweils ein antiparallel geschaltetes Thyristor- bzw. antiseriell geschaltetes IGBT-Paar umfassen.

5. Stufenschalter nach einem der Ansprüche 1 bis 4,
**dadurch gekennzeichnet,**
**dass** mindestens ein Halbleiter-Schaltelement (Sn1... Sn4) aus einer Reihenschaltung oder Parallelschaltung von mindestens zwei einzelnen Halbleiter-Schaltelementen (Sn1...Sn4) besteht.

## Claims

1. A tap changer for voltage regulation with semiconductor switching components on a regulating transformer with a regulating winding
wherein the tap changer (3) has at least one module (M1, M2, M3),
wherein each module (M1, M2, M3) comprises a respective partial winding (W1, W2, W3) of the regulating winding and on both sides thereof two bypass paths,
wherein each bypass path comprises a respective series connection of two semiconductor switching components (S1.1, S1.2; S1.3, S1.4; S2.1, S2.2; S2.3, S2.4; S3.1, S3.2; S3.3, S3.4; S4.1, S4.2; S4.3, S4.4)
wherein a respective centre tap (M1.1, M1.2; M2.1, M2.2; M3.1, M3.2) is provided between each two serially connected semiconductor switching components (S1.1, S1.2; S1.3, S1.4; S2.1, S2.2; S2.3, S2.4; S3.1, S3.2; S3.3, S3.4; S4.1, S4.2; S4.3, S4.4) of each bypass path, wherein one of the two centre taps (M1.2; M2.1, M2.2; M3.1) of each module (M1, M2, M3) is connected with a centre tap of the adjacent modules, respectively,
and wherein one remaining centre tap (M3.2) of the third module (M3) is connectible with the load diverter (4) and the other remaining centre tap (M1.1) of the first module (M1) is connectible with the regulating winding (2) of the regulating transformer,
**characterised in that**
a voltage-dependent resistor (R1.1, R1.2; R1.3, R1.4; R2.1, R2.2; R2.3, R2.4; R3.1, R3.2; R3.3, R3.4; R4.1, R4.2; R4.3, R4.4) connected in series with a respective capacitor (C1.1, C1.2; C1.3, C1.4; C2.1, C2.2; C2.3, C2.4; C3.1, C3.2; C3.3, C3.4; C4.1, C4.2; C4.3, C4.4) is provided in parallel to each semiconductor switching component (S1.1, S1.2; S1.3, S1.4; S2.1, S2.2; S2.3, S2.4; S3.1, S3.2; S3.3, S3.4; S4.1, S4.2; S4.3, S4.4).

2. A tap changer according to claim 1,
**characterised in that**
the tap changer (3) consists of exactly three modules M1, M2, and M3.

3. A tap changer according to claim 2,
**characterised in that**
the partial windings (W1...W3) of the three modules (M1...M3) are divided in the ratio of 1:3:6 or 1:3:9.

4. A tap changer according to any one of the claims 1 to 3,
**characterised in that**
the semiconductor switching components (S1.1, S1.2; S1.3, S1.4; S2.1, S2.2; S2.3, S2.4; S3.1, S3.2; S3.3, S3.4; S4.1, S4.2; S4.3, S4.4) each comprise an anti-parallelly connected thyristor pair or an anti-serially connected IGBT pair.

5. A tap changer according to any one of the claims 1 to 4,
**characterised in that**
at least one semiconductor switching component (Sn1... Sn4) consists of a series connection or a parallel connection of at least two individual semiconductor switching components (Sn1...Sn4).

## Revendications

1. Commutateur à gradins pour permettre une régulation de tension comprenant des éléments de commutation semi-conducteurs montés sur un transformateur de réglage muni d'un enroulement de réglage, dans lequel :
le commutateur à gradins (3) comprend au moins un module (M1, M2, M3),
chaque module (M1, M2, M3) comprend respectivement un enroulement partiel (W1, W2, W3) de l'enroulement de réglage, ainsi que de part et d'autre de celui-ci deux chemins de pontage,
chaque chemin de pontage comporte respectivement un montage en série de deux éléments de commutation semi-conducteurs (S1.1, S1.2, S1.3, S1.4, S2.1, S2.2, S2.3, S2.4, S3.1, S3.2, S3.3, S3.4, S4.1, S4.2, S4.3, S4.4),
entre les deux éléments de commutation semi-conducteurs montés en série (S1.1, S1.2, S1.3, S1.4, S2.1, S2.2, S2.3, S2.4, S3.1, S3.2, S3.3, S3.4, S4.1, S4.2, S4.3, S4.4) de chaque chemin de pontage, il est respectivement prévu une prise de réglage médiane (M1.1, M1.2, M2.1, M2.2, M3.1, M3.2),
l'une des deux prises de réglage médianes (M1.2, M2.1, M2.2, M3.1) de chaque module (M1, M2, M3) est respectivement reliée à une prise de réglage médiane du module voisin, et
l'une des prises de réglage médianes (M3.2) restantes du troisième module (M3) peut être reliée à la ligne de sortie de charge (4) tandis que l'autre prise de réglage médiane (M1.1) restante du premier module (M1) peut être reliée à l'enroulement de réglage (2) du transformateur de réglage, **caractérisé en ce qu'**
en parallèle à chaque élément de commutation semi-conducteur (S1.1, S1.2, S1.3, S1.4, S2.1, S2.2, S2.3, S2.4, S3.1, S3.2, S3.3, S3.4, S4.1, S4.2, S4.3, S4.4) il est prévu une résistance dépendant de la tension (R1.1, R1.2, R1.3, R1.4, R2.1, R2.2, R2.3, R2.4, R3.1, R3.2, R3.3, R3.4, R4.1, R4.2, R4.3, R4.4) respectivement branchée en série avec respectivement un condensateur (C1.1, C1.2, C1.3, C1.4, C2.1, C2.2, C2.3, C2.4, C3.1, C3.2, C3.3, C3.4, C4.1, C4.2, C4.3, C4.4).

2. Commutateur à gradins conforme à la revendication 1,
**caractérisé en ce qu'**
il est constitué d'exactement trois modules M1, M2 et M3.

3. Commutateur à gradins conforme à la revendication 2,
**caractérisé en ce que**
les enroulements partiels (W1...W3) des trois modules (M1...M3) sont répartis dans un rapport 1:3:6 ou 1:3:9.

4. Commutateur à gradins conforme à l'une des revendications 1 à 3,
**caractérisé en ce que**
les éléments de commutation semi-conducteurs (S1.1, S 1.2, S 1.3, S 1.4, S2.1, S2.2, S2.3, S2.4, S3.1, S3.2, S3.3, S3.4, S4.1, S4.2, S4.3, S4.4) comprennent respectivement une paire de thyristor à branchement antiparallèle ou une paire IGBT branchée en anti-série.

5. Commutateur à gradins conforme à l'une des revendications 1 à 4,
**caractérisé en ce qu'**
au moins un élément de commutation semi-conducteur (Sn1...Sn4) est constitué par un montage en série ou un montage en parallèle d'au moins deux éléments de commutation semi-conducteurs (Sn1... Sn4) séparés.
